# EUROPÄISCHE PATENTSCHRIFT

(11) **EP 3 310 609 B1**
(45) Veröffentlichungstag und Bekanntmachung des Hinweises auf die Patenterteilung: **31.07.2019**
(21) Anmeldenummer: 16729490.9
(22) Anmeldetag: 08.06.2016
(51) Int. Cl.: B60L 50/13, H02J 3/38, B60L 1/00, B60L 1/02

(54) **ENERGIEVERSORGUNGS- UND ANTRIEBSANLAGE FÜR SCHIFFE UND OFFSHORE-EINHEITEN**
ENERGY SUPPLY AND DRIVE SYSTEM FOR SHIPS AND OFFSHORE UNITS
SYSTÈME D'ALIMENTATION EN ÉNERGIE ET DE PROPULSION POUR NAVIRES ET PLATES-FORMES OFFSHORE

(30) Priorität: 19.06.2015 DE 102015007941
(43) Veröffentlichungstag der Anmeldung: 25.04.2018
(73) Patentinhaber: Andersen, Peter, 21075 Hamburg (DE)
(72) Erfinder: Andersen, Peter, 21075 Hamburg (DE)
(74) Vertreter: Lelgemann, Karl-Heinz
(86) Internationale Anmeldenummer: PCT/EP2016/000938
(87) Internationale Veröffentlichungsnummer: WO 2016/202436

(56) Entgegenhaltungen:
- DE-A1-102005 056 700
- DE-A1-102011 076 073
- DE-A1-102012 001 892
- DE-A1-102013 210 255
- DE-B3-102013 207 047

## Beschreibung

Die Erfindung bezieht sich auf eine Energieversorgungs- und Antriebsanlage für Schiffe und Offshore-Einheiten, mit Dieselgeneratoreinheiten, mittels denen elektrische Energie erzeugbar ist, Umrichtereinheiten, die jeweils einer Dieselgeneratoreinheit zugeordnet sind und mittels denen die von den Dieselgeneratoreinheiten in Form von Wechselstrom erzeugte elektrische Energie in Gleichstrom umwandelbar ist, einem Gleichspannungszwischenkreis, in den die von den Dieselgeneratoreinheiten erzeugte elektrische Energie über die Umrichtereinheiten als Gleichstrom einspeisbar ist, Antriebseinheiten und weiteren Verbrauchern, die aus dem Gleichspannungszwischenkreis mit elektrischer Energie versorgbar sind, Umrichtereinheiten, die jeweils einer Antriebseinheit, einem Verbraucher bzw. einer Verbrauchergruppe zugeordnet sind und mittels denen die aus dem Gleichspannungszwischenkreis in Form von Gleichstrom abgenommene elektrische Energie in Wechselstrom für die Antriebseinheiten und weiteren Verbraucher umwandelbar ist, und einer Steuervorrichtung, an die die Dieselgeneratoreinheiten, die Umrichtereinheiten, der Gleichspannungszwischenkreis, die Antriebseinheiten und die weiteren Verbraucher angeschlossen sind. Die DE 10 2012 001 892 A1 zeigt ein Energieversorgungssystem für ein Schiff mit mehreren Dieselmotoren.

Ausgehend von dem vorstehend geschilderten Stand der Technik liegt der Erfindung die Aufgabe zugrunde, die geschilderte Energieversorgungs- und Antriebsanlage für Schiffe und Offshore-Einheiten derart weiterzubilden, dass sie bei unterschiedlichsten an sie hinsichtlich der nachgefragten elektrischen Leistung gestellten Anforderungsprofilen besser und flexibler an unterschiedliche lokale Bedingungen anpassbar ist.

Diese Aufgabe wird erfindungsgemäß dadurch gelöst, dass in Abhängigkeit von der in der Steuervorrichtung erfassten angeforderten elektrischen Energie der Antriebseinheiten und weiteren Verbraucher mittels der Steuervorrichtung eine beliebige Anzahl der Dieselgeneratoreinheiten der Energieversorgungs- und Antriebsanlage in Betrieb setzbar und jede in Betrieb gesetzte Dieselgeneratoreinheit unter Berücksichtigung der angeforderten elektrischen Energie und der Anzahl der in Betrieb gesetzten Dieselgeneratoreinheiten individuell in einem optimalen Betriebszustand betreibbar ist, dass die Energieversorgungs- und Antriebsanlage eine Emissionsmessvorrichtung zur Erfassung der von ihr emittierten Abgase und eine Brennstoffmessvorrichtung zur Erfassung ihres Brennstoffverbrauchs aufweist, die beide an die Steuervorrichtung angeschlossen sind, und dass in der Steuervorrichtung sowohl bei der Festlegung der Anzahl der in Betrieb zu setzenden Dieselgeneratoreinheiten als auch bei der Einstellung der Betriebszustände der in Betrieb gesetzten Dieselgeneratoreinheiten Vorgaben für Menge und Qualität der emittierten Abgase und den Brennstoffverbrauch berücksichtigbar sind. Mit der vorstehend geschilderten erfindungsgemäßen Energieversorgungs- und Antriebsanlage kann ein Betrieb derselben sichergestellt werden, bei dem die Anzahl der in Betrieb befindlichen Dieselgeneratoreinheiten an das jeweilige Anforderungsprofil angepasst ist. Zielgröße hierbei ist der optimale Betrieb der gesamten Energieversorgungs- und Antriebsanlage. Dieser optimale Betrieb der gesamten Energieversorgungs- und Antriebsanlage kann - je nach Anforderungsprofil - z.B. vorliegen, wenn lediglich eine Dieselgeneratoreinheit in einem für sie nicht optimalen Betriebszustand betrieben wird. Dies kann zu besseren Ergebnissen für den Betriebszustand der gesamten Energieversorgungs- und Antriebsanlage führen als ein Betrieb derselben mit zwei oder drei in ihrem optimalen Betriebszustand betriebenen Dieselgeneratoreinheiten führen. Selbstverständlich ist der Betriebszustand jeder in Betrieb gesetzten Dieselgeneratoreinheit wiederum optimierbar. Aufgrund der in der Steuervorrichtung zur Verfügung stehenden Daten der Emissionsmessvorrichtung und der Brennstoffmessvorrichtung kann beim Betrieb der Energieversorgungs- und Antriebsanlage berücksichtigt werden, wo sich das mit der Energieversorgungsund Antriebsanlage ausgerüstete Schiff bzw. die damit ausgerüstete Offshore-Einheit gerade befindet. In einem Hafen sind beispielsweise völlig andere Anforderungen an die Menge und die Qualität der emittierten Abgase gestellt als auf hoher See. Während bei Aufenthalt in einem Hafen die Menge und die Qualität der emittierten Abgase von besonderer Bedeutung sind, ist bei Fahrten auf hoher See insbesondere der spezifische Brennstoffverbrauch der Energieversorgungs- und Antriebsanlage von Bedeutung.

Entsprechend kann es zweckmäßig sein, wenn in der Steuervorrichtung die Vorgabe für die Menge und Qualität der emittierten Abgase und/oder die Vorgabe für den Brennstoffverbrauch einstellbar ist.

Um den Betriebszustand der gesamten Energieversorgungs- und Antriebsanlage noch besser optimieren zu können, kann es vorteilhaft sein, für jede Dieselgeneratoreinheit ein nur dieser zugeordnetes Messglied der Emissionsvorrichtung und/oder ein nur dieser zugeordnetes Messglied der Brennstoffmessvorrichtung vorzusehen.

Angesichts der durch die Energieversorgungs- und Antriebsanlage bzw. durch den Betrieb derselben in den Schiffskörper eingeleiteten Belastungen ist es gemäß einer vorteilhaften Weiterbildung der erfindungsgemäßen Energieversorgungs- und Antriebsanlage vorgesehen, in bzw. an Fundamenten der Dieselgeneratoreinheiten Vibrationssensoren anzuordnen, die an die Steuervorrichtung angeschlossen sind, und die Dieselmotoren der Dieselgeneratoreinheiten mittels der Steuervorrichtung so zu betreiben, dass in die Fundamente der Dieselgeneratoreinheiten eingeleitete Vibrationen minimiert werden.

Gemäß einer vorteilhaften Weiterbildung der erfindungsgemäßen Energieversorgungs- und Antriebsanlage sind Generatoren der Dieselgeneratoreinheiten als Asynchrongeneratoren ausgebildet und zwischen jeder Dieselgeneratoreinheit und dem Gleichspannungszwischenkreis angeordnete Umrichtereinheiten bidirektional arbeitend ausgebildet und weisen diese Umrichtereinheiten mindestens einen Kondensator auf, mittels dessen gespeicherter elektrischer Energie der zugeordnete Asynchrongenerator auferregbar ist. Hierdurch kann eine besonders raumsparende Gestaltung der erfindungsgemäßen Energieversorgungs- und Antriebsanlage erreicht werden. Zum Beispiel wird für das Fahr- und Bordnetz an Bord eines Schiffes oder einer Offshore-Anlage keine Drehstrom-Verteilanlage in einem Schaltschrank benötigt. Darüber hinaus können die Dieselgeneratoreinheiten mittels Knopfdruck ein- oder ausgeschaltet werden.

Wenn die Kondensatoren der Umrichtereinheiten als Leistungskondensatoren ausgebildet und Umrichtereinheiten zu Gruppen derselben zusammenschaltbar sind, entstehen vorteilhaft sog. "E-Power-Packs", die einen Erregerstrom zuverlässig liefern, sobald der Asynchrongenerator vom Dieselmotor angetrieben wird und die entsprechende Umrichtereinheit in Betrieb ist.

Hierzu ist es vorteilhaft, wenn die zwischen jeder Dieselgeneratoreinheit und dem Gleichspannungszwischenkreis angeordneten Umrichtereinheiten bi-direktionale Halbleiterelemente wie z.B. IGBT-Schalteinrichtungen aufweisen.

Wenn im Betrieb der erfindungsgemäßen Energieversorgungs- und Antriebsanlage sich im Gleichspannungszwischenkreis einstellende Spannungsänderungen in der Steuervorrichtung erfass- und bei der Steuerung der Dieselgeneratoreinheiten berücksichtigbar sind, ergibt sich ein mit der Regelung eines Wechselspannungsnetzes vergleichbares Verhalten, mit dem zuverlässig verhindert werden kann, dass Generatorleistung zu hoch angefordert und damit Energie verschwendet wird. Gleichzeitig wird auch verhindert, dass es zu einem Zusammenbruch des Bordnetzes kommen kann. In jedem Fall wird die Generatorleistung der Energieanforderung automatisch angepasst.

Um bei bestimmten Anforderungsprofilen an den Betrieb der erfindungsgemäßen Energieversorgungs- und Antriebsanlage beliebige Aggregatgruppen bzw. Aggregate zusammenschalten zu können, ist es vorteilhaft, wenn der Gleichspannungszwischenkreis mittels bi-direktionalen Halbleiterschaltern, vorzugsweise Transistorschaltern, auftrennbar ist.

Um den Aufwand für die In- und Außerbetriebsetzung von Dieselgeneratoreinheiten zu reduzieren und hierdurch die Energieeffizienz der erfindungsgemäßen Energieversorgungs- und Antriebsanlage zu verbessern, ist es vorteilhaft, wenn deren Generatoren mittels der zwischen den Dieselgeneratoreinheiten und dem Gleichspannungszwischenkreis angeordneten Umrichtereinheiten als Elektromotoren betreibbar und deren Dieselmotoren mittels der als Elektromotoren betriebenen Generatoren auf ihre Zünddrehzahl bringbar sind. Hierdurch wird bei den meisten Inbetriebsetzungsvorgängen der Betrieb einer Anlassvorrichtung überflüssig. Der begrenzende Faktor für die Anzahl der Inbetriebsetzungen der Dieselmotoren entfällt somit, da der Dieselmotor selbst hinsichtlich der Anzahl der Inbetriebsetzungsvorgänge nicht begrenzt ist, wobei natürlich vorausgesetzt wird, dass der Dieselmotor vorgewärmt und geschmiert ist, was üblicherweise bei derartigen Energieversorgungs- und Antriebsanlagen der Fall ist.

Um anforderungsgerecht den Zeitraum für eine Zuschaltung einer Dieselgeneratoreinheit weiter zu reduzieren, kann es vorteilhaft sein, wenn die Dieselmotoren mittels der als Elektromotoren betriebenen Generatoren auf eine Drehzahl bringbar sind, die zumindest der optimalen Zünddrehzahl und maximal der Nenndrehzahl der Dieselmotoren entspricht.

Gemäß einer weiteren vorteilhaften Ausgestaltung der erfindungsgemäßen Energieversorgungs- und Antriebsanlage weist deren Steuervorrichtung eine Diagnoseeinheit auf, in der übermittelte Betriebsdaten und von der Steuereinheit ausgegebene Steuersignale erfassbar und in einem Speichermedium abspeicherbar sind, die über Internet und/oder geeignete Datenwege fernzugriffsfähig ist, und der eine Auswerteeinheit zugeordnet ist, mittels der unter Berücksichtigung der erfassten Betriebsdaten und Steuersignale und eines aktuellen Anforderungsprofils an jeden Dieselmotor ein optimierter Betriebsablauf für jeden Dieselmotor errechenbar ist. Hierdurch wird die Möglichkeit geschaffen, dass in einer in quasi beliebiger Entfernung zum Schiff bzw. zur Offshore-Einheit vorhandenen Zentrale Fachleute und Experten Zugriff auf sämtliche Daten nehmen können, die im Zusammenhang mit dem Betrieb der Energieversorgungs- und Antriebsanlage des Schiffes bzw. der Offshore-Einheit anfallen und eine Rolle spielen. Insbesondere ist es möglich, diejenigen Betriebsdaten und Steuersignale in der Zentrale einzusehen, die in einen Zeitraum fallen, in dem eine Störung oder Irregularität des Betriebs der Energieversorgungs- und Antriebsanlage aufgetreten ist.

Im Folgenden wird die Erfindung anhand einer Ausführungsform unter Bezugnahme auf die Zeichnung näher erläutert, deren einzige Figur eine Prinzipdarstellung einer Ausführungsform einer erfindungsgemäßen Energieversorgungs- und Antriebsanlage für Schiffe und Offshore-Einheiten zeigt.

Eine im Folgenden anhand einer Ausführungsform unter Bezugnahme auf die einzige Figur erläuterte erfindungsgemäße Energieversorgungs- und Antriebsanlage 1 für Schiffe, die in ähnlicher Ausgestaltung auch für Offshore-Einheiten zum Einsatz kommen kann, dient dazu, die Energieversorgung an Bord von Schiffen unter Berücksichtigung der für die Antriebsanlage des Schiffes erforderlichen Energie sicherzustellen.

Im in der einzigen Figur dargestellten Ausführungsbeispiel hat die Energieversorgungs- und Antriebsanlage 1 drei Dieselgeneratoreinheiten 2, zu denen jeweils ein Dieselmotor 3 und ein Generator 4 gehören. Die Dieselgeneratoreinheiten 2 sind mit individuell einstellbaren und variablen Generatordrehzahlen betreibbar.

In den Dieselgeneratoreinheiten 2 wird elektrische Energie erzeugt, die in einen Gleichspannungszwischenkreis 5 eingespeist wird. Der Gleichspannungszwischenkreis 5 ist im dargestellten Ausführungsbeispiel in zwei Gleichspannungszwischenteilkreise 6, 7 unterteilt, wobei zwischen den beiden Gleichspannungszwischenteilkreisen 6, 7 Schaltmittel in Form von Halbleiter- bzw. Transistorschaltern oder mechanischen Hochleistungsschaltern 8 vorgesehen sind, mittels denen die beiden Gleichspannungszwischenteilkreise 6, 7 miteinander verbind- bzw. voneinander trennbar sind.

In den Dieselgeneratoreinheiten 2 wird elektrische Energie mit einer Wechselspannung erzeugt, die über erste Umrichtereinheiten 9, in denen eine Gleichrichtung erfolgt, in den Gleichspannungszwischenkreis 5 eingespeist wird. Im dargestellten Ausführungsbeispiel sind bei dem in der einzigen Figur links dargestellten Gleichspannungszwischenteilkreis 6 zwei Dieselgeneratoreinheiten 2 und bei dem in der einzigen Figur rechts dargestellten Gleichspannungszwischenteilkreis 7 eine Dieselgeneratoreinheit 2 vorgesehen.

Des Weiteren gehören zu der Energieversorgungs- und Antriebsanlage 1 zwei Landanschlussvorrichtungen 10, mittels denen der schiffsseitige Gleichspannungszwischenkreis 5 an ein Landnetz anschließbar ist. Jede der beiden Landanschlussvorrichtungen 10, von denen jeweils eine dem Gleichspannungszwischenteilkreis 6 bzw. dem Gleichspannungszwischenteilkreis 7 des Gleichspannungszwischenkreises 5 zugeordnet ist, kann über eine ihr zugeordnete Umrichtereinheit 9 elektrische Energie in den Gleichspannungszwischenkreis 5 einspeisen, wenn sie an ein Landnetz, welches in der einzigen Figur nicht gezeigt ist, angeschlossen ist.

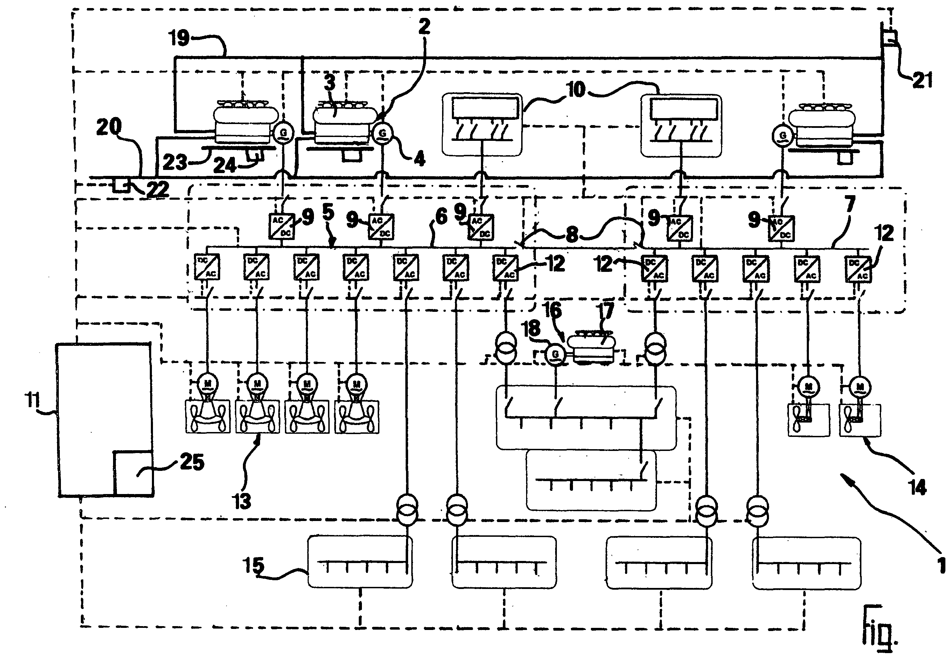

Die Dieselgeneratoreinheiten 2 bzw. deren Dieselmotoren 3 und Generatoren 4, die Schaltmittel 8, die Umrichtereinheiten 9 und die Landanschlussvorrichtungen 10 sind, wie dies in Figur 1 durch gestrichelte Linien gezeigt ist, an eine Steuervorrichtung 11 angeschlossen. In der Steuervorrichtung 11 werden die Betriebsdaten der genannten Aggregate erfasst und mittels der Steuervorrichtung 11 werden die genannten Aggregate gesteuert bzw. geregelt.

Aus dem Gleichspannungszwischenkreis 5 werden über zweite Umrichtereinheiten 12 im Folgenden genannte Verbraucher bzw. Verbrauchergruppen mit elektrischer Energie mit einer Wechselspannung versorgt.

Im dargestellten Ausführungsbeispiel besitzt die Energieversorgungs- und Antriebsanlage 1 vier dem ersten Gleichspannungszwischenteilkreis 6 zugeordnete Propulsionsantriebe 13 und zwei dem zweiten Gleichspannungszwischenteilkreis 7 zugeordnete Propulsionsantriebe 14, wobei die dem ersten Gleichspannungszwischenteilkreis 6 zugeordneten Propulsionsantriebe 13 eine andere Ausgestaltung aufweisen als die dem zweiten Gleichspannungszwischenteilkreis 7 zugeordneten Propulsionsantriebe 14.

Die zweiten Umrichtereinheiten 12 sowie die Propulsionsantriebe 13, 14 sind ebenfalls an die Steuervorrichtung 11 angeschlossen, so dass die Betriebsdaten der genannten Aggregate in der Steuervorrichtung 11 erfassbar sind und die Steuervorrichtung 11 in den Betrieb der genannten Aggregate steuernd bzw. regelnd eingreifen kann.

Darüber hinaus werden aus dem Gleichspannungszwischenkreis 5 ein Schiffsnetz mit einer Vielzahl Verbrauchern bzw. Verbrauchergruppen 15 mit elektrischer Energie versorgt.

Zur Sicherung der Energieversorgung auch bei einem Totalausfall der vorstehend geschilderten Energieversorgungs- und Antriebsanlage 1 ist eine Notgeneratoreinheit 16 mit einem Dieselmotor 17 und einem Generator 18 vorgesehen. Auch diese Notgeneratoreinheit 16 mit Dieselmotor 17 und Generator 18 sowie dieser zugeordnete Umrichtereinheiten 12 sind an die Steuervorrichtung 11 angeschlossen, so dass ihre Betriebsdaten dort erfassbar und in ihren Betrieb ggf. steuernd bzw. regelnd eingreifbar ist.

Entsprechendes gilt für die Verbraucher bzw. Verbrauchergruppen 15, wobei hierbei denkbar ist, dass nur bestimmte Kategorien von Verbrauchern und/oder Verbrauchergruppen 15 an die Steuervorrichtung 11 angeschlossen sind.

Im dargestellten Ausführungsbeispiel sind die drei Dieselmotoren 3 der Dieselgeneratoreinheiten 2 mit einer ihnen gemeinsamen Abgasleitung und einer ihnen gemeinsamen Brennstoff zufuhrleitung 20 ausgerüstet. Alternativ ist es möglich, je Dieselmotor 3 eine Abgasleitung und ggf. auch je Dieselmotor 3 eine Brennstoffzufuhrleitung vorzusehen.

In der Abgasleitung 19 ist eine Emissionsmessvorrichtung 21 angeordnet, mittels der die Menge sowie die Qualität bzw. die Zusammensetzung der durch die Abgasleitung 19 ausströmenden Abgase erfassbar ist. Diese Emissionsmessvorrichtung 21 ist ebenfalls an die Steuervorrichtung 11 angeschlossen. Selbstverständlich ist es auch möglich, jedem Dieselmotor 3 eine dessen Abgase individuell erfassende Emissionsmessvorrichtung zuzuordnen.

In der Brennstoffzufuhrleitung 20 ist eine Brennstoffmessvorrichtung 22 angeordnet, mittels der der Brennstoffverbrauch der an die Brennstoffzufuhrleitung 20 angeschlossenen Dieselmotoren 3 erfassbar ist. Selbstverständlich ist es auch hierbei möglich, jedem Dieselmotor 3 eine dessen Brennstoffverbrauch individuell erfassende Brennstoffmessvorrichtung zuzuordnen.

Auch die Brennstoffmessvorrichtung 22 ist an die Steuervorrichtung 11 angeschlossen.

An einem Fundament 23 jeder Dieselgeneratoreinheit 2 ist ein Vibrationssensor 24 installiert. Mittels des Vibrationssensors 24 sind durch den Betrieb der Dieselgeneratoreinheit 2 bzw. des ihr zugehörigen Dieselmotors 3 an das Fundament 23 weitergeleitete Vibrationen erfassbar. Auch die Vibrationssensoren 24 sind an die Steuervorrichtung 11 angeschlossen.

In der Steuervorrichtung 11 der Energieversorgungs- und Antriebsanlage 1 ist eine Diagnoseeinheit 25 vorgesehen. Die in der Steuervorrichtung 11 erfassten Betriebsdaten der Aggregate der Energieversorgungs- und Antriebsanlage 1 sowie darüber hinaus erfasste Parameter werden an die Diagnoseeinheit 25 weitergeleitet. Dasselbe gilt für sämtliche seitens der Steuervorrichtung 11 an einzelne oder mehrere Aggregate der Energieversorgungs- und Antriebsanlage 1 ausgegebene Steuersignale. Die Betriebsdaten und ggf. weitere Parameter können alternativ auch unmittelbar in die Diagnoseeinheit 25 eingegeben werden.

In der Diagnoseeinheit 25 werden zum einen die jeweils aktuell an diese übermittelten Betriebsdaten, Parameter und Steuersignale erfasst, wobei zum anderen sämtliche an die Diagnoseeinheit 25 weitergeleiteten Betriebsdaten, Parameter und Steuersignale in der Diagnoseeinheit 25 abgespeichert werden.

In der Diagnoseeinheit 25 stehen somit sämtliche den Betrieb der Energieversorgungs- und Antriebsanlage 1 betreffende sowie ggf. weitere Daten zur Verfügung. Die Diagnoseeinheit 25 ist so ausgebildet, dass auf sie bzw. auf die an sie übermittelten bzw. in ihr abgespeicherten Daten mittels einer Zentrale zugegriffen werden kann. Dieser Zugriff kann über das Internet mittels einer Datenbankverbindung bewerkstelligt werden. Der Datenexport ist auch über USB oder andere Netzwerke realisierbar.

Im Betrieb der vorstehend geschilderten Energieversorgungs- und Antriebsanlage wird in der Steuervorrichtung 11 erfasst, wieviel elektrische Energie von den Propulsionsantrieben 13, 14 und den weiteren an den Gleichspannungszwischenkreis 5 angeschlossenen Verbrauchern bzw. Verbrauchergruppen 15 angefordert wird. Entsprechend der Energienachfrage wird mittels der Steuervorrichtung 11 eine an die Energieanfrage angepasste Anzahl der Dieselgeneratoreinheiten 2 in Betrieb gesetzt. Bei bestimmten Anforderungsprofilen hinsichtlich der nachgefragten Energie kann es beispielsweise in Kauf genommen werden, statt dreier Dieselgeneratoreinheiten 2 lediglich zwei oder nur eine Dieselgeneratoreinheit 2 zu betreiben, wobei dann hingenommen wird, dass die betriebene Dieselgeneratoreinheit 2 bzw. die betriebenen Dieselgeneratoreinheiten 2 nicht im optimalen Betriebszustand sind. Ein solcher Betriebszustand der gesamten Energieversorgungs- und Antriebsanlage 1 kann für diese insgesamt dann dennoch optimal sein. Selbstverständlich sind Betriebszustände der Energieversorgungs- und Antriebsanlage 1 vorzuziehen, in denen sowohl die Energieversorgungs- und Antriebsanlage 1 insgesamt als auch die in Betrieb befindlichen Dieselgeneratoreinheiten 2 jeweils in einem optimalen Betriebszustand bzw. nahe einem optimalen Betriebszustand betrieben werden.

Bei dem vorstehend geschilderten Betrieb der Energieversorgungs- und Antriebsanlage 1 werden die in der Emissionsmessvorrichtung 21, die je Dieselgeneratoreinheit 2 ein Messglied aufweisen kann, die emittierten Abgase erfasst. Des Weiteren wird bei der erfindungsgemäßen Energieversorgungs- und Antriebsanlage 1 mittels der Brennstoffmessvorrichtung 22 der Brennstoffverbrauch erfasst, wobei je Dieselgeneratoreinheit ein Messglied vorgesehen sein kann, mittels dem der der jeweiligen Dieselgeneratoreinheit 2 zugeordnete individuelle Brennstoffverbrauch erfasst werden kann.

In der Steuervorrichtung 11 werden sowohl bei der Festlegung der Anzahl der in Betrieb zu nehmenden Dieselgeneratoreinheiten 2 als auch bei der Einstellung der Betriebszustände der in Betrieb gesetzten Dieselgeneratoreinheiten 2 sowohl Vorgaben für die Menge und die Qualität der emittierten Abgase als auch für den Brennstoffverbrauch berücksichtigt. Die entsprechenden Vorgaben für den Brennstoffverbrauch und die Qualität und die Menge der emittierten Abgase können - je nach Aufenthaltsort eines mit der Energieversorgungs- und Antriebsanlage 1 ausgerüsteten Schiffes - unterschiedlich sein. In Häfen können hier völlig andere Vorgaben gemacht werden als auf hoher See. Entsprechend den an die jeweilige konkrete Situation angepassten Vorgaben für die Menge und Qualität der emittierten Abgase bzw. den Brennstoffverbrauch kann die Energieversorgungs- und Antriebsanlage 1 anforderungsgerecht betrieben werden.

Des Weiteren sind im Falle der vorstehend geschilderten Energieversorgungs- und Antriebsanlage 1 die in den Fundamenten 23 der Dieselgeneratoreinheiten 2 angeordneten Vibrationssensoren 24 bzw. deren an die Steuervorrichtung 11 weitergeleiteten Messsignale berücksichtigbar. Um unerwünschte Belastungen des Schiffskörpers aufgrund von Schwingungen insbesondere der Dieselmotoren 3 der Dieselgeneratoreinheiten 2 im Rahmen des Möglichen zu minimieren, kann die Energieversorgungs- und Antriebsanlage 1 mittels der Steuervorrichtung 11 so gesteuert bzw. geregelt werden, dass in die Fundamente 23 der Dieselgeneratoreinheiten 2 möglichst keine bzw. möglichst geringe Vibrationen eingeleitet werden.

Die Generatoren 4 der Dieselgeneratoreinheiten 2 können als Asynchrongeneratoren ausgebildet sein. Die den jeweiligen Generatoren bzw. Asynchrongeneratoren 4 zugeordneten ersten Umrichtereinheiten 9 arbeiten dann bidirektional und weisen zumindest einen Kondensator auf, mittels dem der zugeordnete Asynchrongenerator 4 auferregbar ist. Die Umrichtereinheiten 9 können dann gruppenweise zusammengeschaltet werden.

Bei der Steuerung und Regelung der Dieselgeneratoreinheiten 2 der Energieversorgungs- und Antriebsanlage 1 mittels der Steuervorrichtung 11 werden außerdem Spannungsänderungen berücksichtigt, die sich im Gleichspannungszwischenkreis 5 einstellen.

Die Generatoren 4 der Dieselgeneratoreinheiten 2 können, wenn sie aus dem Gleichspannungszwischenkreis 5 mit elektrischer Energie gespeist werden, als Elektromotoren betrieben werden. Dann sind mittels der Generatoren 4 die Dieselmotoren 3 der Dieselgeneratoreinheiten 2 auf eine Drehzahl bringbar, die zumindest der Zünddrehzahl und maximal der Nenndrehzahl des jeweiligen Dieselmotors 2 entspricht.

## Patentansprüche

1. Energieversorgungs- und Antriebsanlage für Schiffe und Offshore-Einheiten, mit Dieselgeneratoreinheiten (2), mittels denen elektrische Energie erzeugbar ist, Umrichtereinheiten (9), die jeweils einer Dieselgeneratoreinheit (2) zugeordnet sind und mittels denen die von den Dieselgeneratoreinheiten (2) in Form von Wechselstrom erzeugte elektrische Energie in Gleichstrom umwandelbar ist, einem Gleichspannungszwischenkreis (5), in den die von den Dieselgeneratoreinheiten (2) erzeugte elektrische Energie über die Umrichtereinheiten (9) als Gleichstrom einspeisbar ist, Antriebseinheiten (13, 14) und weiteren Verbrauchern (15), die aus dem Gleichspannungszwischenkreis (5) mit elektrischer Energie versorgbar sind, Umrichtereinheiten (12), die jeweils einer Antriebseinheit (13, 14), einem Verbraucher (15) bzw. einer Verbrauchergruppe (15) zugeordnet sind und mittels denen die aus dem Gleichspannungszwischenkreis (5) in Form von Gleichstrom abgenommene elektrische Energie in Wechselstrom für die Antriebseinheiten (13, 14) und weiteren Verbraucher (15) umwandelbar ist, und einer Steuervorrichtung (11), an die die Dieselgeneratoreinheiten (2), die Umrichtereinheiten (9, 12), der Gleichspannungszwischenkreis (5), die Antriebseinheiten (13, 14) und die weiteren Verbraucher (15) angeschlossen sind, **dadurch gekennzeichnet, dass** in Abhängigkeit von der in der Steuervorrichtung (11) erfassten angeforderten elektrischen Energie der Antriebseinheiten (13, 14) und weiteren Verbraucher (15) mittels der Steuervorrichtung (11) eine beliebige Anzahl der Dieselgeneratoreinheiten (2) der Energieversorgungs- und Antriebsanlage (11) in Betrieb setzbar und jede in Betrieb gesetzte Dieselgeneratoreinheit (2) unter Berücksichtigung der angeforderten elektrischen Energie und der Anzahl der in Betrieb gesetzten Dieselgeneratoreinheiten (2) individuell in einem optimalen Betriebszustand betreibbar ist, dass die Energieversorgungs- und Antriebsanlage (1) eine Emissionsmessvorrichtung (21) zur Erfassung der von ihr emittierten Abgase und eine Brennstoffmessvorrichtung (22) zur Erfassung ihres Brennstoffverbrauchs aufweist, die beide an die Steuervorrichtung (11) angeschlossen sind, und dass in der Steuervorrichtung (11) sowohl bei der Festlegung der Anzahl der in Betrieb zu setzenden Dieselgeneratoreinheiten (2) als auch bei der Einstellung der Betriebszustände der in Betrieb gesetzten Dieselgeneratoreinheiten (2) Vorgaben für die Menge und Qualität der emittierten Abgase und den Brennstoffverbrauch berücksichtigbar sind.

2. Energieversorgungs- und Antriebsanlage nach Anspruch 1, in deren Steuervorrichtung (11) die Vorgabe für die Menge und Qualität der emittierten Abgase und/oder die Vorgabe für den Brennstoffverbrauch einstellbar ist.

3. Energieversorgungs- und Antriebsanlage nach Anspruch 1 oder 2, bei der für jede Dieselgeneratoreinheit (2) ein nur ihr zugeordnetes Messglied der Emissionsmessvorrichtung (21) und/oder ein nur ihr zugeordnetes Messglied der Brennstoffmessvorrichtung (22) vorgesehen ist.

4. Energieversorgungs- und Antriebsanlage nach einem der Ansprüche 1 bis 3, bei der in bzw. an Fundamenten (23) der Dieselgeneratoreinheiten (2) Vibrationssensoren (24) angeordnet sind, die an die Steuervorrichtung (11) angeschlossen sind, und Dieselmotoren (3) der Dieselgeneratoreinheiten (2) mittels der Steuervorrichtung (11) so betreibbar sind, dass in die Fundamente (23) der Dieselgeneratoreinheiten (2) eingeleitete Vibrationen minimierbar sind.

5. Energieversorgungs- und Antriebsanlage nach einem der Ansprüche 1 bis 4, bei der Generatoren (4) der Dieselgeneratoreinheiten (2) als Asynchrongeneratoren (4) ausgebildet sind und die zwischen jeder Dieselgeneratoreinheit (2) und dem Gleichspannungszwischenkreis (5) angeordneten Umrichtereinheiten (9) bidirektional arbeitend ausgebildet sind und mindestens einen Kondensator aufweisen, mittels dessen gespeicherter elektrischer Energie der zugeordnete Asynchrongenerator (4) auferregbar ist.

6. Energieversorgungs- und Antriebsanlage nach Anspruch 5, bei der die Kondensatoren der Umrichtereinheiten (9) als Leistungskondensatoren ausgebildet und Umrichtereinheiten (9) zu Gruppen derselben zusammenschaltbar sind.

7. Energieversorgungs- und Antriebsanlage nach einem der Ansprüche 1 bis 6, in deren Betrieb sich im Gleichspannungszwischenkreis (5) einstellende Spannungsänderungen in der Steuervorrichtung (11) erfass- und bei der Steuerung der Dieselgeneratoreinheiten (2) berücksichtigbar sind.

8. Energieversorgungs- und Antriebsanlage nach einem der Ansprüche 1 bis 7, bei der die zwischen jeder Dieselgeneratoreinheit (2) und dem Gleichspannungszwischenkreis (5) angeordneten Umrichtereinheiten bi-direktionale Halbleiterelemente, z.B. IGBT-Schalteinrichtungen, aufweisen.

9. Energieversorgungs- und Antriebsanlage nach einem der Ansprüche 1 bis 8 deren Gleichspannungszwischenkreis (5) mittels bi-direktionalen Halbleiterschaltern, vorzugsweise Transistorschaltern (8), auftrennbar ist.

10. Energieversorgungs- und Antriebsanlage nach einem der Ansprüche 1 bis 9, deren Generatoren (4) mittels zwischen den Dieselgeneratoreinheiten (2) und dem Gleichspannungszwischenkreis (5) angeordneten Umrichtereinheiten (9) als Elektromotoren betreibbar und deren Dieselmotoren (3) mittels der als Elektromotoren betriebenen Generatoren (4) auf ihre Zünddrehzahl bringbar sind.

11. Energieversorgungs- und Antriebsanlage nach Anspruch 10, deren Dieselmotoren (3) mittels der als Elektromotoren betriebenen Generatoren (4) auf eine Drehzahl bringbar sind, die zumindest der optimalen Zünddrehzahl und maximal der Nenndrehzahl der Dieselmotoren (3) entspricht.

12. Energieversorgungs- und Antriebsanlage nach einem der Ansprüche 1 bis 11, deren Steuervorrichtung (11) eine Diagnoseeinheit (25) aufweist, in der übermittelte Betriebsdaten und von der Steuereinheit (11) ausgegebene Steuersignale erfassbar und in einem Speichermedium abspeicherbar sind, die über Internet und/oder geeignete Datenwege fernzugriffsfähig ist, und der eine Auswerteeinheit zugeordnet ist, mittels der unter Berücksichtigung der erfassten Betriebsdaten und Steuersignale und eines aktuellen Anforderungsprofils an jeden Dieselmotor (3) ein optimierter Betriebsablauf für jeden Dieselmotor (3) errechenbar ist.

## Claims

1. An energy-supply and propulsion system for ships and offshore units, having diesel generator units (2), by means of which electrical energy can be generated, converter units (9), which are assigned to one diesel generator unit (2) in each case and by means of which the electrical energy generated by the diesel generator units (2) in the form of alternating current can be converted into direct current, a DC voltage link (5), into which the electrical energy generated by the diesel generator units (2) can be fed via the converter units (9) as direct current, propulsion units (13, 14) and further consumers (15), which can be supplied with electrical energy from the DC voltage link (5), converter units (12), which are assigned in each case to a propulsion unit (13, 14), a consumer (15) or a consumer group (15) and by means of which the electrical energy collected from the DC voltage link (5) in the form of direct current can be converted into alternating current for the propulsion units (13, 14) and further consumers (15), and a control device (11), to which the diesel generator units (2), the converter units (9, 12), the DC voltage link (5), the propulsion units (13, 14) and the further consumers (15) are connected, **characterized in that** a desired number of the diesel generator units (2) of the energy-supply and propulsion system (11) can be set operating by means of the control device (11) as a function of the required electrical energy, detected in the control device (11), of the propulsion units (13, 14) and further consumers (15) and each diesel generator unit (2), which is set operating, can individually be operated in an optimum operating state, taking account of the required electrical energy and the number of the diesel generator units (2), which are set operating, **in that** the energy-supply and propulsion system (1) has an emission measuring device (21) for detecting the exhaust gases emitted by the same and a fuel measuring device (22) for detecting the fuel consumption of the same, which are both connected to the control device (11), and **in that** requirements for the quantity and quality of the emitted exhaust gases and fuel consumption can be taken into account in the control device (11) both during the determination of the number of diesel generator units (2) to be set operating and during the setting of the operating states of the diesel generator units (2), which are set operating.

2. The energy-supply and propulsion system according to Claim 1, in the control device (11) of which, the requirement for the quantity and quality of the emitted exhaust gases and/or the requirement for the fuel consumption can be set.

3. The energy-supply and propulsion system according to Claim 1 or 2, in which, for each diesel generator unit (2), a measuring element of emission measuring device (21), assigned only to the diesel generator unit, and/or a measuring element of the fuel measuring device (22), assigned only to the diesel generator unit, is provided.

4. The energy-supply and propulsion system according to one of Claims 1 to 3, in which vibration sensors (24) are arranged in or on foundations (23) of the diesel generator units (2), which vibration sensors are connected to the control device (11), and diesel engines (3) of the diesel generator units (2) can be operated by means of the control device (11) in such a manner that vibrations introduced into the foundations (23) of the diesel generator units (2) can be minimized.

5. The energy-supply and propulsion system according to one of Claims 1 to 4, in which the generators (4) of the diesel generator units (2) are constructed as asynchronous generators (4) and the converter units (9) arranged between each diesel generator unit (2) and the DC voltage link (5) are constructed in a bidirectionally operating manner and have at least one capacitor, by means of which stored electrical energy of the assigned asynchronous generator (4) can be excited.

6. The energy-supply and propulsion system according to Claim 5, in which the capacitors of the converter units (9) are constructed as power capacitors and converter units (9) can be interconnected to form groups of the same.

7. The energy-supply and propulsion system according to one of Claims 1 to 6, during the operation of which, voltage changes which occur in the DC voltage link (5) can be detected in the control device (11) and taken into account in the control of the diesel generator units (2).

8. The energy-supply and propulsion system according to one of Claims 1 to 7, in which the converter units arranged between each diesel generator unit (2) and the DC voltage link (5) have bidirectional semiconductor elements, e.g. IGBT switching devices.

9. The energy-supply and propulsion system according to one of Claims 1 to 8, the DC voltage link (5) of which can be disconnected by means of bidirectional semiconductor switches, preferably transistor switches (8) .

10. The energy-supply and propulsion system according to one of Claims 1 to 9, the generators (4) of which can be operated as electric motors by means of converter units (9) arranged between the diesel generator units (2) and the DC voltage link (5) and the diesel engines (3) of which can be brought to their firing speed by means of the generators (4) operated as electric motors.

11. The energy-supply and propulsion system according to Claim 10, the diesel engines (3) of which can be brought, by means of the generators (4) operated as electric motors, to a speed which at least corresponds to the optimum firing speed and at most the rated speed of the diesel engines (3).

12. The energy-supply and propulsion system according to one of Claims 1 to 11, the control device (11) of which has a diagnostic unit (25), in which transmitted operating data and control signals output by the control unit (11) can be detected and stored in a storage medium, which can be accessed remotely via the Internet and/or suitable data paths, and to which an evaluation unit is assigned, by means of which an optimized operating sequence for each diesel engine (3) can be calculated whilst taking into account the detected operating data and control signals and a current requirement profile for each diesel engine (3).

## Revendications

1. Installation d'alimentation en énergie et d'entraînement pour des navires et des unités en mer, avec des groupes Diesel électrogènes(2), au moyen desquels de l'énergie électrique peut être produite, des unités de convertisseur (9), qui sont respectivement attribuées à un groupe Diesel électrogène (2) et au moyen desquels l'énergie électrique produite par les groupes Diesel électrogènes (2) sous la forme de courant alternatif peut être convertie en courant continu, un circuit intermédiaire en tension continue (5), dans lequel l'énergie électrique produite par les groupes Diesel électrogènes (2) peut être injectée en tant que courant continu par les unités de convertisseur (9), des unités d'entraînement (13, 14) et d'autres consommateurs (15), qui peuvent être alimentés en énergie électrique à partir du circuit intermédiaire en tension continue (5), des unités de convertisseurs (12), qui sont respectivement attribuées à une unité d'entraînement (13, 14), un consommateur (15) ou un groupe de consommateurs (15) et au moyen desquelles l'énergie électrique absorbée sous forme de courant continu à partir du circuit intermédiaire en tension continue (5) peut être convertie en courant alternatif pour les unités d'entraînement (13, 14) et d'autres consommateurs (15) et un dispositif de commande (11) auquel sont raccordés les groupes Diesel électrogènes (2), les unités de convertisseur (9, 12), le circuit intermédiaire en tension continue (5), les unités d'entraînement (13, 14) et les autres consommateurs (15), **caractérisée en ce qu'**un nombre quelconque d'unités Diesel électrogènes (2) de l'installation d'alimentation en énergie et d'entraînement (11) peut être mis en service au moyen du dispositif de commande (11) en fonction de l'énergie électrique nécessaire saisie dans le dispositif de commande (11) des unités d'entraînement (13, 14) et d'autres consommateurs (15) et chaque groupe Diesel électrogène (2) mis en service peut être exploité individuellement dans un état de fonctionnement optimal en tenant compte de l'énergie électrique nécessaire et du nombre de groupes Diesel électrogènes (2) mis en service, **en ce que** l'installation d'alimentation en énergie et d'entraînement (1) comporte un dispositif de mesure d'émissions (21) pour la saisie des gaz d'échappement émis par celle-ci et un dispositif de mesure du carburant (22) pour la saisie de sa consommation en carburant, qui sont raccordés tous les deux au dispositif de commande (11) et **en ce que** dans le dispositif de commande (11) des consignes doivent être prises en considération pour la quantité et la qualité des gaz d'échappement émis et la consommation de carburant tant lors de la fixation du nombre de groupes Diesel électrogènes (2) à mettre en service que lors de la mise au point des états de fonctionnement des groupes Diesel électrogènes (2) mis en service.

2. Installation d'alimentation en énergie et d'entraînement selon la revendication 1, dans le dispositif de commande (11) de laquelle, la consigne concernant la quantité et la qualité des gaz d'échappement émis et/ou la consigne concernant la consommation de carburant doivent être mises au point.

3. Installation d'alimentation en énergie et d'entraînement selon la revendication 1 ou 2, pour lequel pour chaque groupe Diesel (2) est prévu un organe de mesure seulement attribué à celui-ci du dispositif de mesure d'émissions (21) et/ou un organe de mesure seulement attribué à celui-ci du dispositif de mesure de carburant (22).

4. Installation d'alimentation en énergie et d'entraînement selon l'une quelconque des revendications 1 à 3, pour laquelle des capteurs de vibrations (24) sont disposés dans ou sur les fondations (23) des groupes Diesel électrogènes (2), qui sont raccordés au dispositif de commande (11) et les moteurs Diesel (3) des groupes Diesel électrogènes (2) sont utilisables au moyen du dispositif de commande (11) de telle sorte que les vibrations induites dans les fondations (23) des groupes Diesel électrogènes (2) puissent être minimisées.

5. Installation d'alimentation en énergie et d'entraînement selon l'une quelconque des revendications 1 à 4, pour laquelle des générateurs (4) des groupes Diesel électrogènes (2) sont constitués sous la forme de générateurs asynchrones (4) et les unités de convertisseur (9) disposées entre chaque groupe Diesel électrogène (2) et le circuit intermédiaire en tension continue (5) sont constituées fonctionnant de façon bidirectionnelle et comportent au moins un condensateur au moyen duquel le générateur asynchrone (4) attribué peut amorcer en tension de l'énergie électrique accumulée.

6. Installation d'alimentation en énergie et d'entraînement selon la revendication 5, pour laquelle, les condensateurs des unités de convertisseur (9) sont constitués comme des condensateurs de puissance et les unités de convertisseur (9) peuvent être interconnectées aux groupes de celles-ci.

7. Installation d'alimentation en énergie et d'entraînement selon l'une quelconque des revendications 1 à 6, dans le fonctionnement de laquelle les variations de tension se produisant dans le circuit intermédiaire en tension continue (5) peuvent être saisies dans le dispositif de commande (11) et prises en considération lors du pilotage des groupes Diesel électrogènes (2).

8. Installation d'alimentation en énergie et d'entraînement selon l'une quelconque des revendications 1 à 7, pour laquelle les unités de convertisseur disposées entre chaque groupe Diesel électrogène (2) et le circuit intermédiaire en tension continue (5) comportent des éléments semi-conducteurs bidirectionnels, par ex.: des systèmes de commutation à transistors bipolaires à grille isolée (IGBT).

9. Installation d'alimentation en énergie et d'entraînement selon l'une quelconque des revendications 1 à 8, dont le circuit intermédiaire en tension continue (5) peut être séparé au moyen de commutateurs à semi-conducteurs bidirectionnels, de préférence des commutateurs à transistor (8).

10. Installation d'alimentation en énergie et d'entraînement selon l'une quelconque des revendications 1 à 9, dont les générateurs (4) peuvent être utilisés comme moteurs électriques au moyen des unités de convertisseur (9) disposées entre les groupes Diesel électrogènes (2) et le circuit intermédiaire en tension continue (5) et dont les moteurs Diesel (3) peuvent être placés à leur régime d'allumage au moyen des générateurs (4) utilisés comme moteurs électriques.

11. Installation d'alimentation en énergie et d'entraînement selon la revendication 10, dont les moteurs Diesel (3) peuvent, au moyen des générateurs (4) utilisés comme moteurs, être placés à un régime qui correspond au moins au régime d'allumage optimal et de façon maximum au régime nominal des moteurs Diesel (3).

12. Installation d'alimentation en énergie et d'entraînement selon l'une quelconque des revendications 1 à 11, dont le dispositif de commande (11) comporte une unité de diagnostic (25), dans laquelle peuvent être saisies et mémorisées dans un moyen de mémorisation des données de fonctionnement transmises et des signaux de commande émis par l'unité de commande (11), qui peut être accessible à distance par Internet et/ou des chemins de données adaptés, et à laquelle est attribuée une unité d'exploitation, au moyen de laquelle, il est possible de calculer un déroulement optimal du fonctionnement pour chaque moteur Diesel (3) en tenant compte des données de fonctionnement et des signaux de commande saisis et d'un profil d'exigences actuel adapté à chaque moteur Diesel (3).
